# EUROPEAN PATENT SPECIFICATION

(11) **EP 1 979 126 B1**
(45) Date of publication and mention of the grant of the patent: **14.11.2012**
(21) Application number: 07702908.0
(22) Date of filing: 19.01.2007
(51) Int. Cl.: B23K 35/00

(54) **FILLER MATERIAL, IN PARTICULAR FOR IMPROVING THE QUALITY OF A JOINT SEAM FORMED DURING THERMAL JOINING OF TWO METALLIC STRUCTURAL COMPONENTS**
FÜLLERMATERIAL, INSBESONDERE ZUR VERBESSERUNG DER QUALITÄT EINER BEIM THERMISCHEN VERBINDEN ZWEIER STRUKTURTEILE AUS METALL GEBILDETEN VERBINDUNGSNAHT
MATIÈRE DE CHARGE, EN PARTICULIER DESTINÉE À AMÉLIORER LA QUALITÉ D'UN JOINT FORMÉ AU COURS DU RACCORDEMENT THERMIQUE DE DEUX COMPOSANTS DE STRUCTURE MÉTALLIQUES

(30) Priority: 24.01.2006 DE 102006003191
(43) Date of publication of application: 15.10.2008
(73) Proprietor: Airbus Operations GmbH, 21129 Hamburg (DE)
(72) Inventor: KOCIK, Rainer, 28359 Bremen (DE); HACKIUS, Jens, 28203 Bremen (DE); KASCHEL, Sebastian, 28199 Bremen (DE); SCHUMACHER, Jens, 28279 Bremen (DE)
(74) Representative: Kopf, Korbinian Paul
(86) International application number: PCT/EP2007/000480
(87) International publication number: WO 2007/085389

(56) References cited:
- EP-A2- 1 197 288
- WO-A-94/13472
- WO-A-96/38259
- WO-A-2005/115680
- DE-C1- 19 639 667
- US-A- 3 676 309
- US-A- 4 913 927
- US-A- 5 525 779
- US-A1- 2003 116 234

## Description

### Related Applications

This application claims the benefit of German Patent Application No. 10 2006 003 191.1 filed January 24, 2006, the disclosure of which is hereby incorporated herein by reference.

### Field of the Invention

The invention relates to a filler material, in particular for improving the quality of a joint seam formed during thermal joining of two metallic structural components.

### Background of the Invention

During thermal joining of structural components, filler materials are frequently used in order to enhance the quality of the seam. Depending on various structural component materials, filler materials that are specially matched to the aforesaid are used, which filler materials are, for example, added in the seam formation region during soldering or welding. Usually the filler materials are present in strip- or wire shape. To obtain optimum seam quality, certain quantities of alloy elements have to be added to the filler material. However, due to the limited solubility of the alloy elements in a matrix material and due to the resulting separation problems, up to now it has not been possible to implement alloy compositions at will.

Known filler materials are associated with a disadvantage in that the alloy elements are not soluble at unlimited concentrations in the filler material so that the concentration of alloy elements that is really required for optimum seam quality is not achievable. Furthermore, there is often the difficulty of homogeneously placing the alloy elements in the seam formation region.

There may be a need to avoid the above disadvantages of the known filler materials for thermal joint connections.

The invention provides a filler material for a joint seam formed during thermal joining of two metallic structural components according to the independent claims, further embodiments are incorporated in the dependent claims.

WO 96/38259 describes a consumable welding electrode comprising a metal core and electrically insulating material in contact with the core, wherein one or more parts of the core are not covered by the insulating material on one side of the electrode to enable electrical contact to be made with the core between the ends of the electrode. By using a moving electrical contact a process for in-situ deposition is achieved which can be automated in operation.

Because the filler material according to an exemplary embodiment of the invention comprises a core and a coating that surrounds said core at least in sections, the coating may comprise almost any concentrations of alloying additions for optimal seam formation during the thermal joining process, irrespective of any limitations in relation to the metallurgical composition of the core of the filler material.

An embodiment of the filler material for understanding the invention provides for the filler material to comprise an essentially circular, oval or elliptic cross-sectional geometry. This makes it possible to easily store the filler material, for example in roll form.

A further exemplary embodiment provides for the filler material to comprise an essentially H-shaped cross sectional geometry. Firstly, this allows optimum placement of the filler material in the seam formation region without the need for additional guidance. Secondly, this design makes it possible to affix or align the structural components to be connected by thermal joining. In this arrangement alignment takes place by the special geometric shape of the filler material itself. There is no need to provide separate supply of the filler material during the thermal joining process, so that considerable savings in both time and cost may be achieved.

According to a further exemplary embodiment of the filler material, in each case two limbs of the filler material are spaced apart by a distance that approximately corresponds to the material thickness of the structural components to be joined, so that the two structural components may be fixed by the filler material. In this way the structural components in the seam formation region are slightly jammed or clamped between the limbs of the filler material so that reliable position fixing of the structural components in relation to each other prior to the thermal joining process is possible with the filler material itself.

According to a further exemplary embodiment of the filler material, the material thickness of the middle web of the filler material approximately corresponds to the width of the joint seam to be formed. This ensures that there is no excessive material infeed in the region of the joint seam.

A further exemplary embodiment provides for the coating to comprise a material thickness of less than 100 µm. In this way it is ensured that the coating may be produced easily while at the same time ensuring the supply of an adequate quantity of additional materials in the coating, which additional materials enhance the weld seam quality.

A further exemplary embodiment provides for the core to comprise a metallic base material, in particular aluminium or an aluminium alloy. In this way the composition of the base material may essentially be selected irrespective of metallurgical requirements so as to provide optimum joint seam characteristics of the alloying material in the coating. Thus, the base material can, for example, be optimised in a targeted manner with a view to easy processability and/or low production costs. Preferably the base material essentially comprises aluminium or an aluminium alloy.

A further exemplary embodiment provides for the coating to comprise a metallic alloying material, in particular copper, silicon, lithium or the like. In this way the composition or the quality of the metallic alloying material for coating may be focused in a targeted way on achieving optimum joint seam characteristics, largely independently of the requirements that the base metal has to meet. In order to achieve optimum characteristics of the joint seam, the metallic alloying material for coating preferably comprises copper, silicon, lithium, or a combination of these.

### Brief Description of the Drawings

The following are shown in the drawing:
- **Fig. 1**: a cross section of a comparative filler material,
- **Fig. 2**: a longitudinal section of the comparative filler material,
- **Fig. 3**: a cross section of an exemplary embodiment of the filler material according to the invention with two structural components that are to be thermally joined, and
- **Fig. 4**: a top view of an exemplary embodiment of the filler material according to the invention with the two structural components.

In the drawing, the same reference characters are used for identical construction elements.

### Detailed Description of Exemplary Embodiments

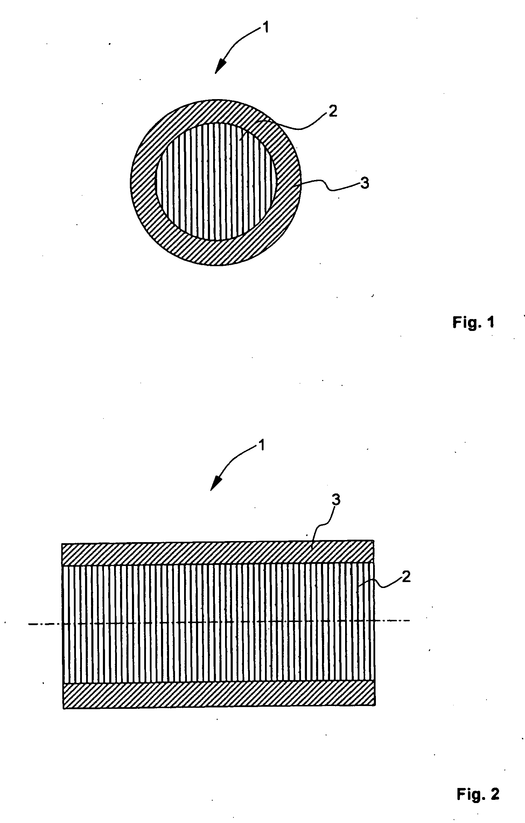

**Fig. 1** shows a cross section of a comparative filler material, in a first embodiment variant.

The heterogeneous filler material 1 for improving the quality of joint seams in thermal joining processes, in particular in welding- or soldering processes, comprises an essentially circular cross-sectional geometry. The filler material 1 is formed by a core 2 and a coating 3 that surrounds said core 2. In the exemplary embodiment shown the coating 3 concentrically encloses the core 2. The essentially circular cross-sectional geometry (cylindrical shape of the wire) of the filler material 1 makes it possible to easily store the filler material 1, for example in roll shape, and furthermore ensures easy feed-in or supply of the filler material to the seam formation region, which is of importance in particular in the case of automated thermal joining processes. Other cross-sectional shapes, such as, for example, a polygonal, oval or elliptic cross-sectional geometry, are also imaginable.

The core 2 of the filler material 1 may be formed using non-precious metals as base materials, for example aluminium, aluminium alloys or the like. Coating 3 of the core 2 may comprise an alloying material, for example copper, silicon, lithium or any desired combination of these materials. Depending on the materials composition of the structural components that are to be thermally joined, in which materials composition the filler material 1 is used as an auxiliary joining material to enhance the seam quality, the core 2 and/or the coating 3 may comprise metals and/or metal alloys that are different from the above. The fact that the alloying composition of the coating 3 may be selected entirely without regard to any metallurgical restrictions concerning the chemical composition of the core 2 is of central importance.

**Fig. 2** shows a longitudinal section of the comparative filler material 1. The core 2 is completely, i.e. coaxially, enclosed by the coating 3. In a manner that differs from this, the core 2 may also be enclosed by the coating 3 only in parts. For example, the coating 3 may be designed in longitudinal direction of the wire-shaped filler material 1 in the form of strips of alloying material, which strips are arranged on the core 2 so as to be evenly spaced apart from each other in radial direction.

The coating 3 can, for example, be applied to the core 2 by known methods, such as, for example, by galvanic coating methods, brushing-on a paste-like metallic alloying material, spraying on a metallic alloying material, or by PVD coating processes.

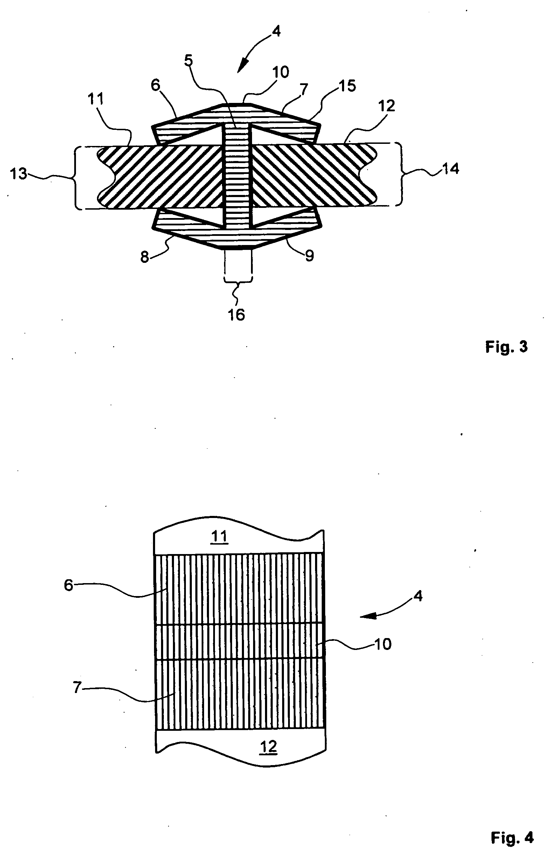

**Fig. 3** shows a cross section of the filler material according to an exemplary embodiment of the invention.

In this embodiment variant a filler material 4 comprises a core 5 with an essentially H-shaped or double-T-shaped cross-sectional geometry. The core 5 of the filler material 4 may again comprise non-precious metals as a base material, for example aluminium, aluminium alloys or the like. The core 5 comprises a total of four limbs 6 to 9, which are connected to one another by a middle web 10 that extends essentially perpendicularly. The limbs 6, 7 as well as the limbs 8, 9 are pointing inward, in a slight V-shape, at an angle of less than 30° in relation to horizontal. As a result of the essentially H-shaped cross-sectional geometry of the filler material 4 and of the slightly V-shaped alignment of the limbs 6 to 9, structural components 11, 12, which are to be connected by the thermal joining process, may be clamped between the limbs 6 and 8, and 7 and 9, and may be aligned in relation to each other and fixed. In order to ensure largely displacement-proof clamping of the structural components 11, 12, the distance between the limbs 6, 8 or 7, 9 is somewhat less than the thickness of the material 13, 14 of the structural components 11, 12.

The structural components 11, 12 can, for example, be sheet-like structures, for example aluminium sheeting or sheeting comprising an aluminium alloy. Furthermore, the structural components 11, 12 may be linear structures, for example reinforcement profiles comprising aluminium or an aluminium alloy.

In the exemplary embodiment shown, the core 5 of the filler material 4 again comprises a coating 15 all round, which coating 15 comprises a suitable alloying material, for example copper, silicon, lithium, or a combination of these metals so that a heterogeneous filler material 4 is created. The coating 15 may also be in place only in certain sections.

In the region of the middle web 10, in the thermal joining process between the abutting edges of the structural components 11, 12 a joint seam (not shown in Fig. 3) arises, wherein thorough mixing of the materials of the structural components 11, 12, of the base material of the core 5, and of the alloying material of the coating 15 takes place. In this arrangement the width 16 of the middle web 10 preferably essentially corresponds to the width of the joint seam to be formed or being created. In a manner different from that just mentioned, the width 16 of the middle web 10 may be narrower or wider.

Due to the cross-sectional geometry, according to the invention, of the filler material 4, which cross-sectional geometry is essentially H-shaped, feed-in of the base material and/or of the alloying material into the seam formation region occurs with precise local placement and precise metering. There is no need to separately feed in a conventional auxiliary welding or soldering material, so that this results in the potential of achieving considerable savings in both time and cost.

**Fig. 4** shows a top view of the filler material 4 according to an exemplary embodiment of the invention.

The structural components 11, 12 are fixed or aligned for a subsequent joining process and are kept together by the limbs 6, 7 connected by the middle web 10 and by the limbs 8, 9 (not shown in Fig. 4), arranged below the above.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

### List of reference characters

- 1: Filler material
- 2: Core
- 3: Coating
- 4: Filler material
- 5: Core
- 6: Limb
- 7: Limb
- 8: Limb
- 9: Limb
- 10: Middle web
- 11: Structural component
- 12: Structural component
- 13: Material thickness
- 14: Material thickness
- 15: Coating
- 16: Width

## Claims

1. A filler material (1, 4) for a joint seam formed during thermal joining of two metallic structural components (11, 12), wherein the filler material (1, 4) comprises a core (2, 5) and a coating (3, 15) that surrounds said core at least in sections, and comprises an essentially H-shaped cross-sectional geometry, such that in each case two spaced limbs (6, 8; 7, 9) of the filler material (4) connected by a middle web (10) are spaced apart by a distance that approximately corresponds to the material thickness (13, 14) of structural components (11, 12) to be joined, so that the two structural components (11, 12) may be fixed by the filler material (4) and wherein the material thickness of the middle web (10) of the filler material (4) approximately corresponds to the width (16) of the joint seam to be formed.

2. The filler material (1, 4) of any one of claims 1 wherein the coating (3, 15) comprises a material thickness of less than 100 µm.

3. The filler material (1,4) of any one of claims 1 to 2, wherein the core (2, 5) comprises a metallic base material, in particular aluminium or an aluminium alloy.

4. The filler material (1, 4) of any one of claims 1 to 3, wherein the coating (3, 15) comprises a metallic alloying material, in particular copper, silicon or lithium.

5. The filler material (1, 4) of any one of claims 1 to 4, wherein the two respective spaced limbs (6, 8; 7, 9) of the filler material (4) are pointing inward, in a slight V-shape, at an angle of less than 30 ° in relation to the horizontal, such that they align and fix the two structural components (11, 12) to be joint.

## Patentansprüche

1. Zusatzwerkstoff (1, 4) für eine während eines thermischen Fügens von zwei metallischen Strukturbauteilen (11, 12) gebildete Fügenaht, wobei der Zusatzwerkstoff (1, 4) einen Kern (2, 5) und eine diesen zumindest in Bereichen umgebende Beschichtung (3, 15) und eine im Wesentlichen H-förmige Querschnittsgeometrie aufweist, so dass jeweils zwei beabstandete Schenkel (6, 8; 7, 9) des Zusatzwerkstoffs (4), die durch einen Mittelsteg (10) miteinander verbunden sind, einen Abstand aufweisen, der in etwa einer Materialstärke (13, 14) der zu fügenden Strukturbauteile (11, 12) entspricht, so dass die beiden Strukturbauteile (11, 12) durch den Zusatzwerkstoff (4) fixiert werden können und wobei die Materialstärke des Mittelstegs (10) des Zusatzwerkstoffs (4) in etwa der Breite (16) der zu bildenden Fügenaht entspricht.

2. Zusatzwerkstoff (1, 4) nach Anspruch 1, wobei die Beschichtung (3, 15) eine Materialstärke von weniger als 100 µm aufweist.

3. Zusatzwerkstoff (1, 4) nach einem der Ansprüche 1 oder 2, wobei der Kern (2, 5) einen metallischen Ausgangsstoff aufweist, insbesondere Aluminium oder eine Aluminiumlegierung.

4. Zusatzwerkstoff (1, 4) nach einem der Ansprüche 1 bis 3, wobei die Beschichtung (3, 15) ein metallisches Legierungsmaterial aufweist, insbesondere Kupfer, Silizium oder Lithium.

5. Zusatzwerkstoff (1, 4) nach einem der Ansprüche 1 bis 4, wobei die jeweils zwei beabstandeten Schenkel (6, 8; 7, 9) des Zusatzwerkstoffs (4) geringfügig V-förmig, in einem Winkel kleiner als 30° in Bezug zu der Horizontalen, nach innen zeigen, so dass sie die zu fügenden Strukturbauteile (11, 12) ausrichten und fixieren.

## Revendications

1. Matière de charge (1, 4) pour une ligne de jonction formée lors de la jonction thermique de deux composants de structure métalliques (11, 12), dans laquelle la matière de charge (1, 4) comprend un coeur (2, 5) et un revêtement (3, 15) qui entoure ledit coeur au moins dans des sections, et comprend une géométrie en coupe transversale sensiblement en forme de H , de telle sorte que dans chaque cas, deux branches espacées (6, 8 ; 7, 9) de la matière de charge (4) reliées par une bande médiane (10) sont espacées d'une distance qui correspond approximativement à l'épaisseur de matière (13, 14) des éléments de structure (11, 12) à assembler, de telle sorte que les deux éléments de structure (11, 12) peuvent être fixés par la matière de charge (4), et dans lequel l'épaisseur de matière de la bande médiane (10) de la matière de charge (4) correspond approximativement à la largeur (16) de la ligne de jonction devant être formée.

2. Matière de charge (1, 4) selon la revendication 1, dans laquelle le revêtement (3, 15) comprend une épaisseur de matière inférieure à 100 µm.

3. Matière de charge (1,4) selon l'une quelconque des revendications 1 à 2, dans laquelle le coeur (2, 5) comprend un matériau de base métallique, en particulier de l'aluminium ou un alliage d'aluminium.

4. Matière de charge (1, 4) selon l'une quelconque des revendications 1 à 3, dans laquelle le revêtement (3, 15) comprend un matériau d'alliage métallique, en particulier du cuivre, du silicium ou du lithium.

5. Matière de charge (1, 4) selon l'une quelconque des revendications 1 à 4, dans laquelle les deux branches espacées respectives (6, 8 ; 7, 9) de la matière de charge (4) sont dirigées vers l'intérieur, dans une légère forme de V, à un angle inférieur à 30 ° par rapport à l'horizontale, de telle sorte qu'elles alignent et fixent les deux éléments de structure (11, 12) à assembler.
